# EUROPÄISCHE PATENTSCHRIFT

(11) **EP 0 320 790 B1**
(45) Veröffentlichungstag und Bekanntmachung des Hinweises auf die Patenterteilung: **09.03.1994**
(21) Anmeldenummer: 88120507.4
(22) Anmeldetag: 08.12.1988
(51) Int. Cl.: A61B 5/103, A61C 19/04

(54) **Messsonde zur Verwendung in der Zahnimplantologie**
Measuring probe for dental implant applications
Sonde de mesure pour l'emploi dans l'implantologie dentaire

(30) Priorität: 12.12.1987 DE 8716415 U
(43) Veröffentlichungstag der Anmeldung: 21.06.1989
(73) Patentinhaber: Bauer, Ernst, Dr., D-61231 Bad Nauheim (DE)
(72) Erfinder: Schuster, Wilhelm, D-6000 Frankfurt/M.-90 (DE)
(74) Vertreter: Fuchs Mehler Weiss

(56) Entgegenhaltungen:
- BE-A- 349 724
- FR-A- 947 866
- US-A- 1 361 376
- US-A- 3 058 225
- US-A- 3 943 914
- US-A- 4 314 406

## Beschreibung

Die Erfindung betrifft eine Meßsonde zur Verwendung in der Zahnimplantologie gemäß dem Oberbegriff des Anspruchs 1.

In der Zahnimplantologie ist es erwünscht, die Einsetztiefe eines Implantats möglichst genau zu bestimmen, um ein entsprechend dimensioniertes Implantat einzulegen. Es ist bekannt, bei Blattimplantaten einen Bolzen zu verwenden, der in verschiedenen Höhen umlaufende Rillen aufweist. Der Bolzen wird in die vorgefertigte Höhlung des Kiefers eingeführt, und an den Rillen wird mit mehr oder weniger Augenmaß die Messung vorgenommen. Eine solche Bestimmung kann naturgemäß nicht sehr genau sein und ist für Nadel- oder Schraubenimplantate ungeeignet.

Aus der US-A- 4,314,406 ist eine Meßsonde bekannt, die einen Grundkörper, der eine rotationssymmetrische Bohrung aufweist, die von einer verschiebbaren Sondennadel durchsetzt ist, und ein am Grundkörper angesetztes Mittel zum Verklemmen der Sondennadel aufweist.

Der Grundkörper der bekannten Meßsonde ist zumindest in seinem unteren Bereich zylinderförmig aufgebaut.

Die aus der FR-A- 947.866 bekannte Sonde weist ebenfalls ein zylinderförmig ausgebildetes Fixierungsteil auf. Die Fixierung erfolgt dadurch, daß das Fixierungsteil axial vom Nadelende her zusammengedrückt wird.

Der Erfindung liegt daher die Aufgabe zugrunde, eine Sondennadel zur Verfügung zu stellen, die bei einfacher Handhabung eine genaue Messung der Länge eines Bohrkanals im Kieferknochen erlaubt.

Diese Aufgabe wird durch die kennzeichnenden Merkmale des vorgelegten Anspruchs 1 gelöst.

Zweckmäßige Weiterbildungen der Meßsonde sind in den Unteransprüchen gekennzeichnet.

Eine solche Meßsonde gestattet eine äußerst genaue Messung der Einsetztiefe insbesondere eines Schraubenimplantats, bei dem mittels eines Implantatbohrers ein enger Kanal als Implantatbett für den Implantatkörper in den Kiefer gebohrt wird. Die in dem Grundkörper und in der Spannzange axial verschiebbare Sondennadel wird in den Bohrkanal eingeführt, bis die Nadelspitze auf die kompakte Knochensubstanz der Gegenkortikalis des Kiefers stößt. Die Unterseite des Grundkörpers der Meßsonde wird auf den Alveolarkamm des Kiefers aufgesetzt und in dieser Stellung wird die Sondennadel festgelegt. Dies geschieht durch leichtes Verdrehen der Klemm- oder Spannhülse, die die Spannzange gegen die Sondennadel spannt und diese in der eingestellten Höhe arretiert. Das über die Unterseite vorstehende Stück der Sondennadel gibt nun die genau benötigte Länge des Implantatkörpers an, der dann, falls erforderlich, am Implantatfuß gekürzt werden kann.

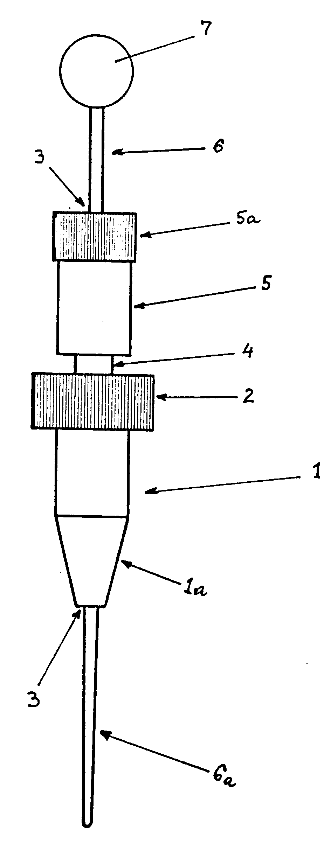

Die Erfindung wird an einem in der Zeichnung dargestellten Ausführungsbeispiel näher erläutert.

Die Meßsonde besteht aus einem Grundkörper 1, dessen Querschnitt zweckmäßig rund ist, wobei sein unterer Bereich 1a zur leichteren Handhabung vorzugsweise konisch verjüngt ist. Diese Ausbildung erleichtert das Ansetzen der Meßsonde in einer Zahnlücke, die nur einen beengten Spielraum läßt. An dem dem konischen Bereich 1a abgekehrten Ende des Grundkörpers 1 ist ein erhabener, umlaufender Griffrand 2 vorgesehen, der ebenfalls das Arbeiten erleichtert.

Der Grundkörper 1 weist eine rotationssymmetrische Bohrung 3 auf, die sich in einer Spannzange 4 fortsetzt, die auf der Oberseite, das heißt auf der dem konischen Bereich 1a abgekehrten Seite des Grundkörpers 1 angesetzt ist.

Auf die Spannzange 4 ist eine Klemm- oder Spannhülse 5 aufgesetzt und auf der Spannzange 4 verdrehbar. Die Klemm- oder Spannhülse 5 ist so ausgelegt, daß sie in jeder Winkelstellung auf der Spannzange 4 stufenlos arretierbar ist. Zum leichteren Anfassen und Verdrehen ist die Klemm- oder Spannhülse 5 mit einem geriffelten Griffring 5a versehen.

Durch die Bohrung 3 der Spannzange 4 und des Grundkörpers 1 ist eine Sondennadel 6 gesteckt und darin axial verschiebbar. Die Sondennadel ist naturgemäß länger als die zusammengesetzten Teile: Grundkörper 1, Spannzange 4 und Klemm- oder Spannhülse 5. Sie steht demnach über die freie Unterseite des Grundkörpers 1 und über die freie Oberseite der Kelmm- oder Spannhülse 5 vor. Der Bereich 6a der Sondennadelspitze ist zweckmäßig konisch ausgebildet und am gegenüberliegenden Ende ist ein Sondenkopf 7 vorgesehen, der das Anfassen und Führen der Sondennadel 6 erleichtert.

## Patentansprüche

1. Meßsonde zur Verwendung in der Zahnimplantologie zum genauen Bestimmen der Länge eines Bohrkanals im Kieferknochen mit einem Grundkörper (1), der eine rotationssymmetrische Bohrung aufweist, die von einer Sondennadel (6) durchsetzt ist, und mit einem am Grundkörper (1) angesetzten Mittel zum Verklemmen der Sondennadel (4, 5), dadurch gekennzeichnet, daß das Mittel zum Verklemmen eine auf den Grundkörper (1) aufgesetzte Spannzange (4), die von der Bohrung durchsetzt ist, und eine mit der Spannzange (4) drehbar zusammenwirkende Spannhülse (5) ist, und daß die der Spannzange (4) gegenüberliegende Seite des Grundkörpers (1) einen konisch zulaufenden Endabschnitt (1a) aufweist.

2. Meßsonde nach Anspruch 1, dadurch gekennzeichnet, daß die Klemm- oder Spannhülse (5) in jeder Winkelstellung stufenlos arretierbar ist.

3. Meßsonde nach Anspruch 2, dadurch gekennzeichnet, daß die Klemm- oder Spannhülse (5) mit einem geriffelten Griffring (5a) versehen ist.

4. Meßsonde nach Anspruch 1, dadurch gekennzeichnet, daß der Grundkörper (1) einen runden Querschnitt aufweist und mit einem umlaufenden Griffrand (2) versehen ist.

5. Meßsonde nach Anspruch 1, dadurch gekennzeichnet, daß die Sondennadel (6) an ihrem aus dem Grundkörper (1) nach unten vorstehenden Endabschnitt (6a) konisch ausgebildet ist.

6. Meßsonde nach Anspruch 1, dadurch gekennzeichnet, daß die Sondennadel (6) an ihrem oberen Ende einen Sondenkopf (7) aufweist.

## Claims

1. A measuring probe for use in implantology for an exact determination of the length of a bore hole channel in the jaw bone, said measuring probe comprising a basic body (1) having a dynamically balanced bore and being permeated by a probe needle, (6) and means attached to the basic body (1) to clamp the probe needle (4, 5), characterized in that the clamping means consist of a collet chuck (4) mounted on the basic body (1) and being permeated by the bore, and of a collet (4) in rotable cooperation with said collet chuck (5), and that the side of the basic body (1) being located opposite to said collet chuck (4) comprises a tapered end section (1a).

2. A measuring probe according to claim 1, characterized in that a collet (5) can be continuously arrested at each angle of incidence.

3. A measuring probe according to claim 2, characterized in that said collet (5) is provided with a corrugated handling collar (5a).

4. A measuring probe according to claim 1, characterized in that said basic body (1) comprises a circular coss-section and is provided with a handling hoop (2) passing around.

5. A measuring probe according to claim 1, characterized in that, at the end section (6a) protruding from the basic body (1) downwards, the probe needle (6) is developped conically.

6. A measuring probe according to claim 1, characterized in that said probe needle (6) comprises a probe head (7) at its upper end.

## Revendications

1. Sonde de mesure pour l'emploi dans l'implantologie dentaire pour la détermination exacte de la longueur d'un canal de fraisure à l'os maxillaire, ladite sonde comportant un corps de base (1) ayant une fraisure à symétrie de révolution pénétrée par une broche à sonder (6), et un moyen placé au corps de base (1) pour le coincement de la broche à sonder (4,5), caractérisée en ce que le moyen pour le coincement se compose d'une pince de serrage (4) posée sur le corps de base (1) et pénétrée par la fraisure, et d'une douille de serrage (5) à engagement rotatif avec ladite pince de serrage (4), et que le côté du corps de base étant (1) opposé à la pince de serrage (4) comporte une section finale (1a) effilée.

2. Sonde de mesure d'après la revendication 1, caractérisée en ce que l'on peut arrêter la douille de serrage (5) sans gradation à chaque position angulaire.

3. Sonde de mesure d'après la revendication 2, caractérisée en se que la douille de serrage (5) est munie d'une bague à préhension (5a) cannelée.

4. Sonde de mesure d'après la revendication 1, caractérisée en ce que le corps de base (1) montre une vue en coupe circulaire et qu'il est muni d'une bordure à préhension contournante (2).

5. Sonde de mesure d'après la revendication 1, caractérisée en ce que la broche à sonder (6) est développée coniquement à sa section finale (6a) débordant vers le bas.

6. Sonde de mesure d'après la revendication 1, caractérisée en ce que la broche à sonder (6) est muni d'une tête de sonde (7) à son bout supérieur.
